# EUROPEAN PATENT APPLICATION

(11) **EP 3 851 311 A1**
(43) Date of publication of application: **21.07.2021**
(21) Application number: 19860809.3
(22) Date of filing: 10.09.2019
(51) Int. Cl.: B60K 7/00, B60L 3/00, B60L 15/00, B60T 5/00, H02K 5/18

(54) **IN-WHEEL MOTOR DRIVE DEVICE**

(30) Priority: 13.09.2018 JP 2018171120
(71) Applicant: NTN Corporation, Osaka-shi, Osaka 550-0003 (JP)
(72) Inventor: SUGIURA, Saori, Iwata-shi, Shizuoka 438-8510 (JP); TAMURA, Shiro, Iwata-shi, Shizuoka 438-8510 (JP)
(74) Representative: Bockhorni & Brüntjen Partnerschaft Patentanwälte mbB
(86) International application number: PCT/JP2019/035489
(87) International publication number: WO 2020/054698

(57) **Abstract**

An in-wheel motor drive device (1) is arranged inside a wheel (W) of a wheel (92). The in-wheel motor drive device (1) includes a motor rotating shaft that rotates the wheel, as well as a motor unit (21) including a motor casing (29) that houses the motor rotating shaft, and a plurality of cooling fins (41) provided protruding from an inner end surface (29e) in a vehicle width direction of the motor casing and extending along a vehicle front-rear direction. In a state in which an orientation in a front-rear direction of the wheel (92) is aligned with an orientation in the vehicle front-rear direction, a protruding tip position at a vehicle rear side (41b) of the cooling fin (41) is positioned more inwards in the vehicle width direction than a protruding tip position at a vehicle front side (41a) of the cooling fin (41).

## Description

### Technical Field

The present invention relates to an in-wheel motor drive device, and particularly relates to an in-wheel motor drive device in which a plurality of cooling fins are provided on an outer surface of a motor casing.

### Background Art

An in-wheel motor drive device arranged inside a wheel includes a motor unit for driving the wheel, a wheel hub bearing unit to which the wheel is attached, and a reducer unit for reducing rotation of the motor unit and transmitting this to the wheel hub bearing unit. The motor unit contains many heat generating elements, and hence a technique in which a plurality of cooling fins are provided on an outer surface of a motor casing to cool the motor unit has been conventionally proposed.

Moreover, in Japanese Unexamined Patent Publication No. 2013-75604 (Patent Document 1), it is desclosed that, in an in-wheel motor drive device in which a center axis of a motor is arranged on a vehicle front side of a center axis of a wheel and a brake caliper is arranged on a vehicle rear side of the center axis of the wheel, both the motor unit and the brake caliper are cooled by cooling fins provided on an inner end surface of a motor casing in a vehicle width direction to guide traveling wind to the brake caliper.

### Citation List

### Patent Literatures

Japanese Unexamined Patent Publication No. 2013-75604

### Summary of Invention

### Technical Problem

In Patent Document 1, the end surface of the motor casing is formed in a curved shape to be more outside in the vehicle width direction toward the vehicle rear side, and the cooling fins extend in a vehicle front-rear direction in such a manner that a height from the end surface to a protruding tip position of the cooling fins is substantially uniform along an extending direction themselves.

In this case, in accordance with the form of the end surface of the motor casing, the protruding tip position of the cooling fins is also curved to be more outside in the vehicle width direction toward the vehicle rear side. As a result, the traveling wind from the vehicle front side blows against only the front parts of the cooling fins. In this case, the cooling performance of the cooling fins decreases on the vehicle rear side in comparison with the vehicle front side, and hence it is difficult to cool the motor unit effectively.

The present invention is accomplished to solve the problems as described above, and its object is to provide an in-wheel motor drive device that is capable of cooling the motor unit effectively.

### Solution to Problem

An in-wheel motor drive device according to an aspect of this invention is arranged inside a wheel. The in-wheel motor drive device includes a motor unit including a motor rotating shaft that rotates the wheel as well as a motor casing that houses the motor rotating shaft, and a plurality of cooling fins that are provided on an inner end surface in a vehicle width direction of the motor casing to protrude from the inner end surface and extend along a vehicle front-rear direction. In a state in which an orientation of the wheel is aligned with an orientation of the vehicle front-rear direction, a protruding tip position at a vehicle rear side of the cooling fins is positioned more inwards in the vehicle width direction than the protruding tip position at a vehicle front side of the cooling fins.

Preferably, a protruding height of the cooling fins increases in degree toward the vehicle rear side.

Alternatively, the inner end surface in the vehicle width direction of the motor casing may be inclined or curved so as to be more inwards in the vehicle width direction toward the vehicle rear side.

An axis of the motor rotating shaft is arranged on the vehicle front side of the center axis of the wheel. In this case, the in-wheel motor drive device may further include an air guide member that guides air passing through the plurality of cooling fins to a brake caliper located on the vehicle rear side of the center axis of the wheel.

The in-wheel motor drive device further includes a reducer unit including a reducer mechanism configured to reduce and output rotation of the motor rotating shaft, and a reducer casing configured to house the reducer mechanism, and the motor casing and the reducer casing configure a housing of the in-wheel motor drive device. In this case, the air guide member is desirably arranged, when viewed from top, in an inner diameter side region of a minimum virtual circle which surrounds the housing and whose center is an intersection of the center axis and a steering axis of the wheel.

The air guide member may be formed of porous material.

### Advantageous Effects of Invention

According to the present invention, the motor unit can be cooled effectively.

### Brief Description of Drawings

Fig. 1 is a longitudinal section view cutting an in-wheel motor drive device according to an embodiment of the present invention at a predefined plane, and illustrating this in a developed manner.
Fig. 2 is a cross sectional view schematically illustrating an inner structure of a reducer unit of the in-wheel motor drive device according to an embodiment of the present invention.
Fig. 3 is a top view of the in-wheel motor drive device according to the present embodiment, and is a view schematically illustrating a state in which the in-wheel motor drive device is attached to a wheel.
Fig. 4 is a view schematically illustrating a state viewing the in-wheel motor drive device from direction IV in Fig. 3.
Fig. 5(A) and Fig. 5(B) are views schematically illustrating cooling performance of a cooling fin according to the embodiment of the present invention.
Fig. 6 is a top view of an in-wheel motor drive device according to a modification of the embodiment of the present invention, and is a view schematically illustrating a state in which the in-wheel motor drive device is attached to a wheel.
Fig. 7 is a view schematically illustrating a state viewing the in-wheel motor drive device from direction VII in Fig. 6.
Figs. 8(A) and 8(B) are views schematically illustrating cooling performance of a cooling fin in a comparative example.

### Description of Embodiments

An embodiment of the present invention is described in detail with reference to the drawings. Identical or equivalent portions within the drawings will be provided with identical reference symbols, and their descriptions will not be repeated.

### <Basic configuration example>

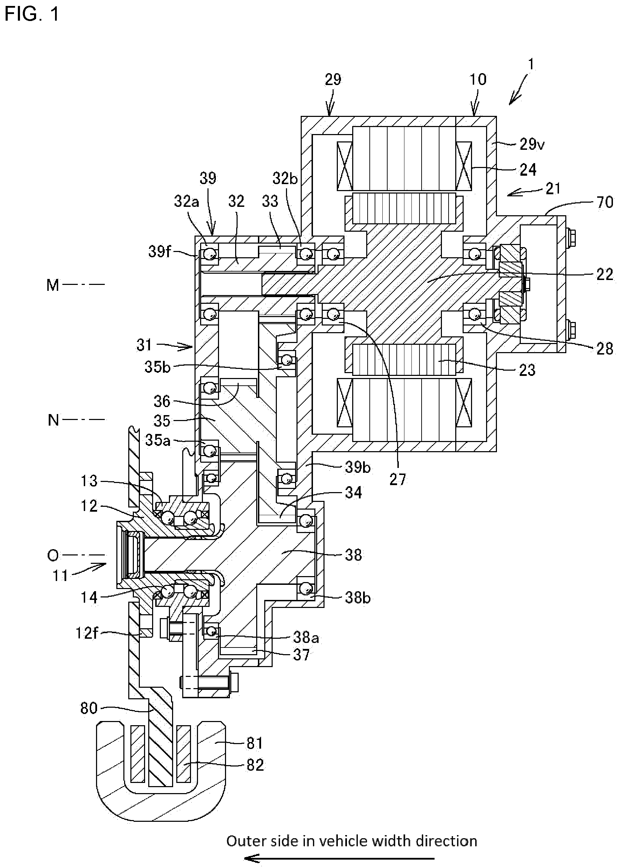

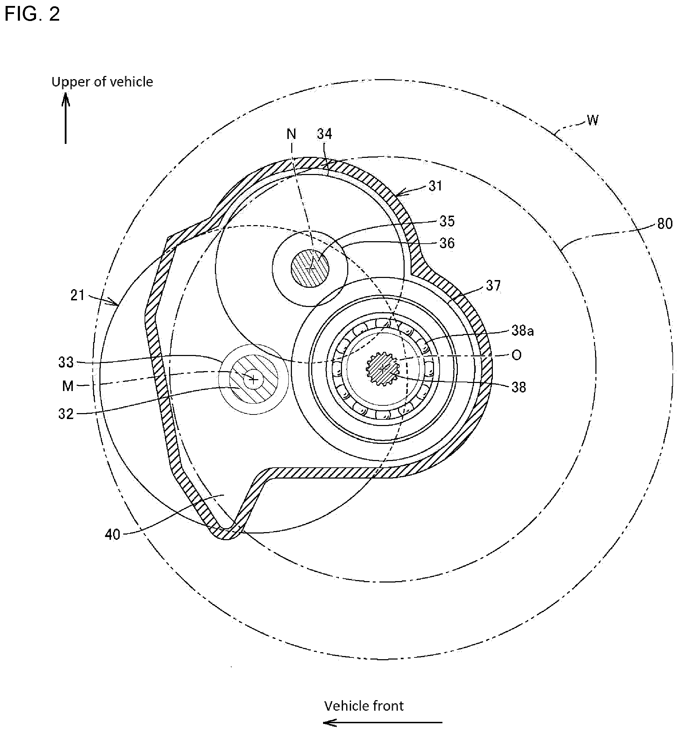

First described with reference to Figs. 1 and 2 is an example of a basic configuration of an in-wheel motor drive device 1 according to an embodiment of the present invention. Fig. 1 is a longitudinal section view cutting the in-wheel motor drive device 1 according to the embodiment of the present invention at a predefined plane, and illustrating this in a developed manner. Fig. 2 is a cross sectional view illustrating an inner structure of a reducer unit 31 of the in-wheel motor drive device 1, and schematically represents a state viewed from an outer side in a vehicle width direction. The predefined plane shown in Fig. 1 is a developed plan connecting a plan including an axis M and an axis N shown in Fig. 2 and a plan including the axis N and an axis O, in this order. In Fig. 1, the left side of the printed drawing represents an outer side (outboard side) in the vehicle width direction, and the right side in the printed drawing represents an inner side (inboard side) in the vehicle width direction.

The in-wheel motor drive device 1 is a motor drive device for a vehicle that drives wheels or vehicle wheels of an electric motor vehicle. The in-wheel motor drive device 1 is arranged inside a wheel W, and is connected to a vehicle body not illustrated. The in-wheel motor drive device 1 can make the electric motor vehicle run at a speed of 0 to 180 km/h.

The in-wheel motor drive device 1 includes a wheel hub bearing unit 11 provided in the center of the wheel W, a motor unit 21 that drives the wheels, and a reducer unit 31 that reduces the rotation of the motor unit 21 and transmits this to the wheel hub bearing unit 11. The in-wheel motor drive device 1 includes a housing 10 that forms its contour, and the housing 10 is configured by a motor casing 29 and a reducer casing 39 described later.

The motor unit 21 and the reducer unit 31 are arranged offset from an axis O of the wheel hub bearing unit 11. The axis O extends in the vehicle width direction, and coincides with the axle. In the present embodiment, one side in the axis O direction corresponds to the outer side in the vehicle width direction, and another side in the axis O direction corresponds to the inner side in the vehicle width direction.

Regarding positions in the axis O direction, the wheel hub bearing unit 11 is arranged on the one side in the axis direction of the in-wheel motor drive device 1, the motor unit 21 is arranged on another side in the axis direction of the in-wheel motor drive device 1, the reducer unit 31 is arranged on the one side in the axis direction of the motor unit 21, and a position in the axis direction of the reducer unit 31 overlaps with the position in the axis direction of the wheel hub bearing unit 11.

The wheel hub bearing unit 11 is for example such a type that it has a rotating inner ring and a stationary outer ring. The wheel hub bearing unit 11 has an inner ring 12 as a rotating ring (hub ring) that couples with the wheel W, an outer ring 13 as a stationary ring arranged on an outer diameter side of the inner ring 12 and coaxially with the same, and a plurality of rolling elements 14 arranged in an annular space between the inner ring 12 and the outer ring 13. A center of rotation of the inner ring 12 coincides with the axis O that passes through the center of the wheel hub bearing unit 11.

The outer ring 13 penetrates through a front portion 39f of the reducer casing 39 and is connected and fixed to this front portion 39f. The front portion 39f is a casing wall part that covers one end in the axis O direction of the reducer unit 31 among the reducer casing 39.

The inner ring 12 is a cylindrical body longer than the outer ring 13, and is passed through a center hole of the outer ring 13. One end in the axis O direction of the inner ring 12 that protrudes externally (to the outer side in the vehicle width direction) from the outer ring 13 is formed having a coupling unit 12f. The coupling unit 12f is a flange, and configures a coupling part for coaxially coupling with a brake disk 80 and the wheel. The inner ring 12 couples with the wheel W at the coupling unit 12f, and rotates integrally with the vehicle wheel.

The outer peripheral surface of a center part in the axis O direction of the inner ring 12 configures an inner race surface of the rolling elements 14. The rolling elements 14 may be arranged in a plural number of rows. An output shaft 38 of the reducer unit 31 is inserted into a center hole on the other end in the axis O direction of the inner ring 12, and is spline fit or serration fit.

The brake disk 80 has a rotor part sandwiched by a brake pad 82 supported by a brake caliper 81 and a hat part formed to recess in the outer side in the vehicle width direction from an inner diameter side end of the rotor part.

The motor unit 21 has a motor rotating shaft 22, a rotor 23, and a stator 24, and these are arranged successively in this order from the axis M of the motor unit 21 to the outer diameter side thereof. The motor unit 21 is a radial gap motor with an inner rotor and outer stator form, however this may be of another form.

The motor unit 21 includes a motor casing 29, and components such as the motor rotating shaft 22 are housed in the motor casing 29. A cylindrical part of the motor casing 29 surrounds the periphery of the stator 24. One end in the axis M direction of the cylindrical part of the motor casing 29 couples with a back portion 39b of the reducer casing 39. The back portion 39b is a wall part that covers another end in the axis M direction (axis O direction) of the reducer unit 31 among the reducer casing 39. Another end in the axis M direction of the cylindrical part of the motor casing 29 is sealed by a plate-shaped rear cover 29v. The rear cover 29v is a wall part that configures an inner end surface in the vehicle width direction of the motor casing 29. This rear cover 29v is provided with cooling fins 41 as described below, however illustrations of the cooling fin 41 is omitted in Fig. 1.

Both end parts of the motor rotating shaft 22 are rotatably supported on the back portion 39b of the reducer casing 39 and the rear cover 29v, via rolling-element bearings 27, 28. The axis M serving as the center of rotation for the motor rotating shaft 22 and the rotor 23 is arranged on the vehicle front side of the center axis of the vehicle wheel, namely the axis O of the wheel hub bearing unit 11.

The reducer unit 31 includes a parallel axes gear reducer of three-axes type that has axes O, N, M extending parallel to each other, as a reducer mechanism for reducing the rotation of the motor rotating shaft 22. Specifically, the reducer unit 31 has an input shaft 32 that couples coaxially with the motor rotating shaft 22, an input gear 33 provided coaxially on an outer peripheral surface of the input shaft 32, a plurality of intermediate gears 34, 36, an intermediate shaft 35 that couples with centers of these intermediate gears 34, 36, the output shaft 38 that couples coaxially with the inner ring 12 of the wheel hub bearing unit 11, and an output gear 37 provided coaxially on an outer peripheral surface of the output shaft 38. The reducer unit 31 includes the reducer casing 39, and these reducer mechanisms are housed in the reducer casing 39.

The input shaft 32 is rotatably supported on the front portion 39f and the back portion 39b of the reducer casing 39 via rolling-element bearings 32a, 32b, on both end sides of the input gear 33. The axis N serving as the center of rotation for the intermediate shaft 35 extends parallel to the axis O. Both ends of the intermediate shaft 35 are rotatably supported on the front portion 39f and the back portion 39b of the reducer casing 39, via bearings 35a, 35b. At a center part of the intermediate shaft 35, the first intermediate gear 34 and the second intermediate gear 36 are provided coaxially to the axis N of the intermediate shaft 35. A diameter of the first intermediate gear 34 is larger than a diameter of the second intermediate gear 36. The first intermediate gear 34 with larger diameter is arranged on another side in the axis N direction of the second intermediate gear 36, and meshes with input gear 33 having smaller diameter. The second intermediate gear 36 with smaller diameter is arranged on one side in the axis N direction of the first intermediate gear 34, and mesh with the output gear 37 having larger diameter.

The axis N of the intermediate shaft 35 is arranged upper of the axis O and the axis M, as illustrated in Fig. 2. Moreover, the axis N of the intermediate shaft 35 is arranged on the vehicle rear side of the axis M as well as on the vehicle front side of the axis O.

The output gear 37 is provided coaxially at the center part of the output shaft 38. The output shaft 38 extends along the axis O. One end in the axis O direction of the output shaft 38 is inserted into the center hole of the inner ring 12 and is fit so as not to be relatively rotatable. Such fitting is spline fitting or serration fitting. The center part (one end side) of the output shaft 38 in the axis O direction is rotatably supported by the front portion 39f of the reducer casing 39 via a rolling-element bearing 38a. The end part (another end side) of the output shaft 38 in the axis O direction is rotatably supported on the back portion 39b of the reducer casing 39 via a rolling-element bearing 38b.

The reducer unit 31 reduces the rotation of the input shaft 32 and transmits this to the output shaft 38, by engaging with a driving gear of smaller diameter and a driven gear of larger diameter each other, namely by engaging with the input gear 33 and the first intermediate gear 34, and engaging with the second intermediate gear 36 and the output gear 37. Such rotating elements from the input shaft 32 to the output shaft 38 of the reducer unit 31 configure a drive transmission path that transmits the rotation of the motor unit 21 to the inner ring 12. The input shaft 32, the intermediate shaft 35, and the output shaft 38 are supported at both ends by the rolling-element bearings described above. These rolling-element bearings 32a, 35a, 38a, 32b, 35b, 38b are radial bearings.

The reducer casing 39 includes a cylindrical portion, as well as the plate-shaped front portion 39f and back portion 39b that cover both ends of the cylindrical portion. The cylindrical portion covers internal components of the reducer unit 31 so as to surround the axes O, N, M extending parallel to each other. The plate-shaped front portion 39f covers the internal component of the reducer unit 31 from the one side in the axis direction. The plate-shaped back portion 39b covers the internal components of the reducer unit 31 from another side in the axis direction. As illustrated in Fig. 2, an oil tank 40 in which lubricating oil is pooled may be provided at a lower part of the reducer casing 39.

The back portion 39b of the reducer casing 39 couples with the motor casing 29, and it is also a partition that partitions an internal space of the reducer unit 31 and an internal space of the motor unit 21. The motor casing 29 is supported by the reducer casing 39 and protrudes toward another side in the axis direction from the reducer casing 39.

When electric power is supplied to the stator 24 of the motor unit 21 from the outside of the in-wheel motor drive device 1, the rotor 23 of the motor unit 21 rotates, and the rotation is outputted from the motor rotating shaft 22 to the reducer unit 31. The reducer unit 31 reduces the rotation inputted from the motor unit 21 to the input shaft 32, and outputs this from the output shaft 38 to the wheel hub bearing unit 11. The inner ring 12 of the wheel hub bearing unit 11 rotates at the same rotational speed as the output shaft 38, and drives the vehicle wheel attached and fixed to the inner ring 12.

When the electric motor vehicle is running, the motor unit 21 reaches a high temperature. Accordingly, the in-wheel motor drive device 1 includes a cooling structure for cooling the motor unit 21. The following describes the cooling structure for the motor unit 21 in details.

### <Cooling structure>

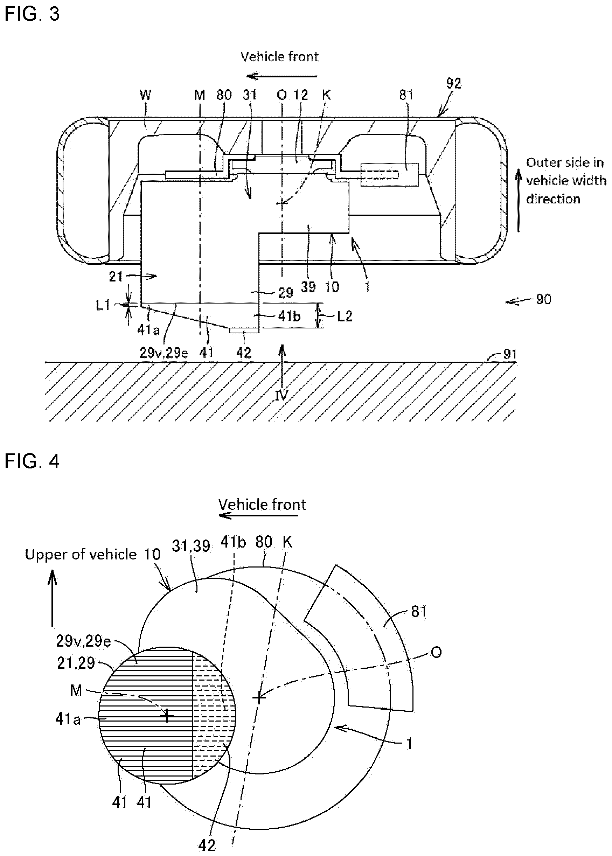

Figs. 3 and 4 are views schematically illustrating the cooling structure of the motor unit 21 in the present embodiment. Fig. 3 is a top view of the in-wheel motor drive device 1, and schematically illustrates a state in which the in-wheel motor drive device 1 is attached to a vehicle wheel 92. Fig. 4 schematically illustrates a state viewing the in-wheel motor drive device 1 from the inner side in the vehicle width direction illustrated by the IV direction in Fig. 3.

As illustrated in Fig. 3, the vehicle wheel 92 is arranged in a wheel house 90 of a vehicle body 91. The in-wheel motor drive device 1 is connected to the wheel W of the vehicle wheel 92 and the brake disk 80, at the inner ring 12 serving as a hub ring. The brake disk 80 is arranged on the inner side in the vehicle width direction of the wheel W. As illustrated in Figs. 3 and 4, the brake caliper 81 is arranged in its entirety on the vehicle rear side of the center axis O of the vehicle wheel 92.

Since the motor unit 21 is arranged on the inner side in the vehicle width direction of the reducer unit 31, one part of the motor unit 21 protrudes out from the wheel W toward the inner side in the vehicle width direction. Therefore, the entire rear cover 29v of the motor casing 29 is positioned outside the wheel W.

The rear cover 29v is provided with a plurality of cooling fins 41. That is to say, the plurality of cooling fins 41 are provided to protrude from an inner end surface 29e in the vehicle width direction of the motor casing 29. The plurality of cooling fins 41 are arranged at regular intervals, and extend along a vehicle front-rear direction. The cooling fins 41 may extend in a horizontal direction, or may slightly incline or curve with respect to the horizontal direction.

Here, as illustrated in Fig. 3, in a state in which an orientation of a front-rear direction of the vehicle wheel 92 is aligned with an orientation of the front-rear direction of the vehicle, namely in a straight forward state while the vehicle is running, a protruding tip position of the cooling fins 41 at the vehicle rear side is positioned more inwards in the vehicle width direction than a protruding tip position at the vehicle front side of the cooling fins 41. In the present embodiment, a protruding height of the cooling fins 41 increases toward the vehicle rear side. Namely, a protruding dimension L2 at a rear end part of each cooling fin 41 is greater than a protruding dimension L1 at a front end part of each cooling fin 41. This allows for enhancing cooling performance of the cooling fins 41.

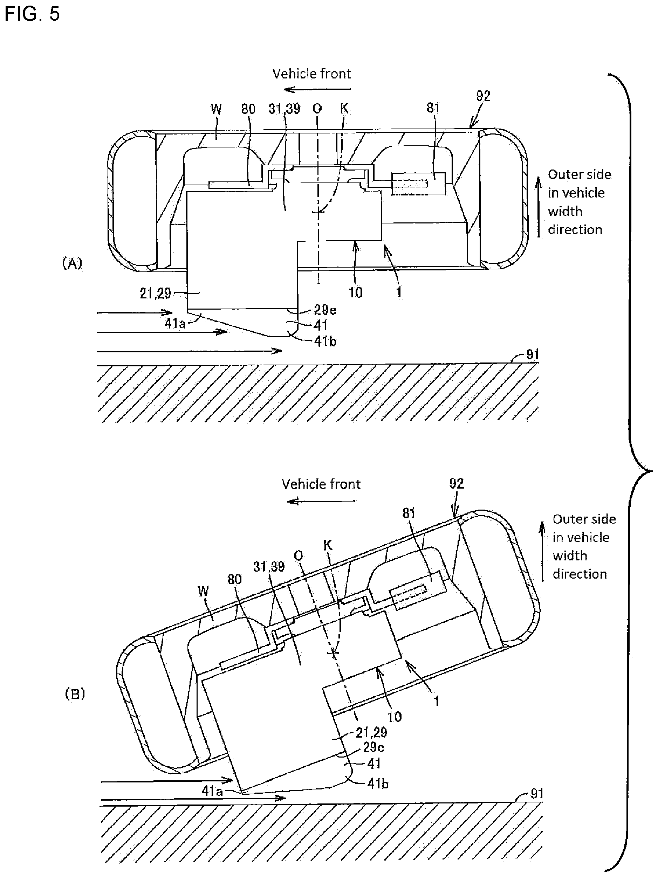

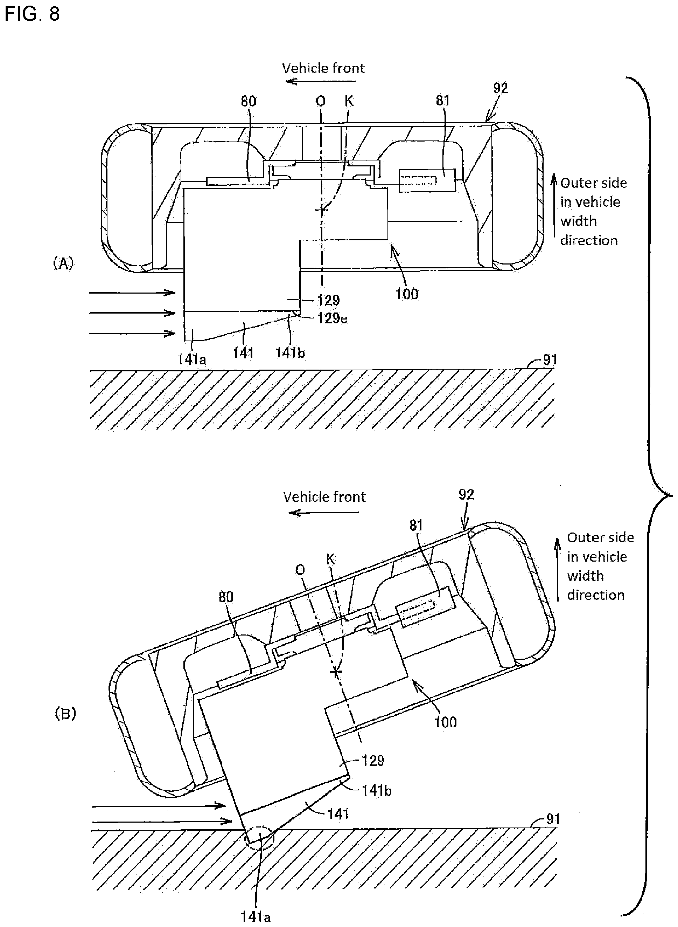

The cooling performance of the cooling fin 41 is described below based on Fig. 5. For easy understanding, description is made with reference to a comparative example illustrated in Fig. 8. Fig. 5(A) illustrates the straight forward state of the vehicle wheel 92, and Fig. 5(B) illustrates a steering state of the vehicle wheel 92. The steering state illustrated in Fig. 5(B) is to show a state in which a front side of the vehicle wheel 92 is made closest to the vehicle body 91, and a rear side of the vehicle wheel 92 is made farthest from the vehicle body 91. Fig. 8(A) illustrates the same state as that of Fig. 5(A), and Fig. 8(B) illustrates the same state as that of Fig. 5(B). These drawings conceptually illustrate a steering axis K.

With reference to Fig. 8, the in-wheel motor drive device 100 in the comparative example has cooling fins 141 provided on an inner end surface 129e in the vehicle width direction of the motor casing 129 , as the in-wheel motor drive device 1 in the present embodiment, however, the protruding height of the cooling fins 141 increases as the cooling fins 141 extends toward the vehicle front side. Therefore, in either of the straight forward state of the vehicle wheel 92 illustrated in Fig. 8(A) and the steering state illustrated in Fig. 8(B), the traveling wind from the vehicle front side will not directly hit (or hardly will hit) rear end parts 141b of cooling fins 141, and will only directly hit front end parts 141a of cooling fins 141.

On the other hand, according to the present embodiment, as illustrated in Fig. 5(A), in the straight forward state, the traveling wind from the vehicle front side will directly hit not only the front end parts 41a of the cooling fins 41 but also the rear end parts 41b thereof. This hence allows for enhancing cooling efficiency of the entire cooling fins 41. Moreover, as illustrated in Fig. 5(B), when the vehicle wheel 92 is steering, the protruding tip position of the cooling fins 41 is hardly different between the front end part 41a and the rear end part 41b. That is to say, a space between a tip position of the rear end part 41b of the cooling fin 41 and the vehicle body 91 is substantially the same as a space between a tip position of the front end part 41a of the cooling fin 41 and the vehicle body 91, or is just slightly larger. Therefore, according to the present embodiment, even at the time of steering the vehicle wheel 92, it is possible to prevent the decrease in cooling performance of the cooling fins 41.

Furthermore, in the comparative example, even when the vehicle wheel 92 is moving straight forward as illustrated in Fig. 8(A), the protruding tip position at the front end part 141a of the cooling fin 141 is closer to the vehicle body 91 than the protruding tip position at the rear end part 141b. In this case, a radius from a center point of the vehicle wheel 92 (an intersection of the center axis O and the steering axis K of the vehicle wheel 92) to the front end part 141a of the cooling fin 141 is longer than a radius from a center point of the vehicle wheel 92 to the front end part 41a of the cooling fin 41 in the present embodiment. Therefore, in the structure of the comparative example, in order to cause no conflict between the front end part 141a of the cooling fin 141 and the vehicle body 91 as illustrated in Fig. 8(B) at the time of steering, there occurs a need to change an internal design, for example shortening the length of the motor rotating shaft in the axial direction.

In comparison, in the present embodiment, since the rear end part 41b of the cooling fin 41 is positioned more inwards in the vehicle width direction than the front end part 41a in the straight forward state, it is possible to avoid the conflict between the front end part of the cooling fin 41 and the vehicle body 91 at the time of steering, without changing the internal design.

The protruding dimension of the cooling fin 41 is not limited to the form increasing at a certain proportion while extending from front to rear of the vehicle. Namely, a tip shape of the cooling fin 41 extending in the vehicle front-rear direction is not limited to a linear shape, and may be for example in a stair form or a wave form. Moreover, in terms of handling properties, a shape of a corner at the rear end of the cooling fin 41 may be round.

Alternatively, each cooling fin 41 may has a uniform protruding height in the vehicle front-rear direction, and the inner end surface 29e of the motor casing 29 in the vehicle width direction may be inclined or curved ,instead, so as to be more inwards in the vehicle width direction toward the vehicle rear side. Thus, in the straight forward state, the protruding tip position at the vehicle rear side of the cooling fins 41 may be positioned more inwards in the vehicle width direction than the protruding tip position at the vehicle front side thereof.

Moreover, as illustrated in Figs. 3 and 4, a cover member 42 may be provided to cover the protruding tip part of a portion closest to the vehicle body 91 (rear end part 41b) among the plurality of cooling fins 41 from the inner side in the vehicle width direction. This allows for protecting the rear end part 41b of the cooling fins 41 from flying objects such as flipping stones while restraining the decrease in cooling performance of the cooling fin 41.

The cover member 42 is formed in a plate shape, and is arranged parallel to an advancing direction at the time the vehicle wheel 92 moves straight forward for example. In this case, as illustrated in Fig. 3, among the cooling fins 41, the protruding height of the rear end part 41b on which the cover member 42 is covered may be uniform.

The cover member 42 may be provided in contact with the protruding tip part of the rear end part 41b of the cooling fins 41. In this case, the cover member 42 may be formed integrally with the cooling fins 41. In a case in which the cover member 42 is separate from the cooling fins 41, the cover member 42 may be configured by sound absorbing material or soundproof material. That is to say, the cover member 42 may be formed of porous material such as glass wool.

As illustrated in Figs. 3 and 4, in the present embodiment, the brake caliper 81 for braking the brake disk 80 is located on the vehicle rear side of the center axis O of the vehicle wheel 92. In this case, an air guide member that guides air passing through the cooling fins 41 to the brake caliper 81 may be provided. An embodiment in which the in-wheel motor drive device includes the air guide member is described below as a modification of the present embodiment.

### (Modification)

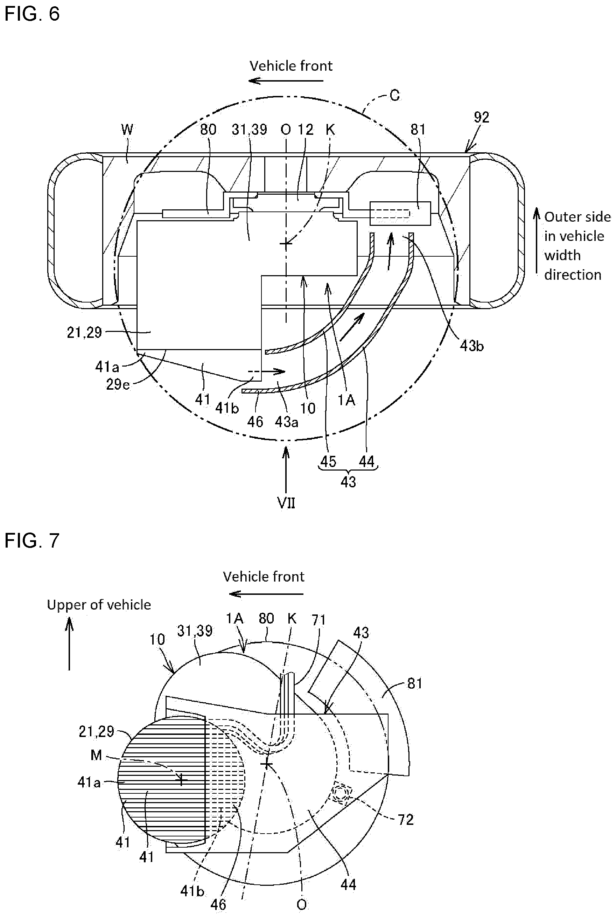

Fig. 6 is a top view of an in-wheel motor drive device 1A according to a modification of the present embodiment, and is a view schematically illustrating a state in which the in-wheel motor drive device 1A is attached to the vehicle wheel 92. Fig. 7 is a view schematically illustrating a state viewing the in-wheel motor drive device 1A from the inner side in the vehicle width direction illustrated by direction VII in Fig. 6.

The in-wheel motor drive device 1A according to the present modification includes an air guide member 43. The air guide member 43 is a member that guides air passing through the plurality of cooling fins 41 to the brake caliper 81 located on the vehicle rear side of the center axis O of the vehicle wheel 92. The cooling fins 41 are provided on the inner end surface 29e in the vehicle width direction of the motor casing 29 with its protruding height increasing as the cooling fins 41 extend toward the vehicle rear side, as with the present embodiment for example.

The air guide member 43 includes two guide plates 44, 45 that are provided to have a space therebetween, as illustrated in Fig. 6. The guide plates 44, 45 each extend in the vehicle front-rear direction, and curve so that the plates are made more outwards in the vehicle width direction toward the vehicle rear side. The space between the guide plates 44, 45 is desirably equal to or more than the protruding dimension L2 of the rear end part 41b of the cooling fin 41 illustrated in Fig. 3. The space between the guide plates 44, 45 is typically substantially constant from its front end to its rear end.

Front end portions of the guide plates 44, 45 form an inlet 43a from which the air passing through the cooling fins 41 is taken in. Moreover, rear end portions of the guide plates 44, 45 form an air outlet 43b from which the air taken in is sent to the brake caliper 81.

More specifically, the guide plate 44 includes a covering part 46 that covers the protruding tip part of the rear end part 41b of the cooling fin 41, and extends toward the vehicle rear side and toward the outer side in the vehicle width direction so as to draw an arc to a position proximal to the inner end surface in the vehicle width direction of the brake caliper 81. As such, the guide plate 44 may also function as the cover member 42 described above. A gap may be provided between the cover part 46 and the protruding tip part of the cooling fins 41.

The guide plate 45 is arranged on the outer side in the vehicle width direction of the guide plate 44. The guide plate 45 extends in a substantially arc shape toward the vehicle rear side and toward the outer side in the vehicle width direction from around the rear end position of the cooling fins 41 to a position proximal to the inner end surface in the vehicle width direction of the brake caliper 81, in a manner continuing to the inner end plate 29e in the vehicle width direction of the motor casing 29.

In the present modification, by providing such air guide member 43, the traveling wind that cools the motor unit 21 can also be used for cooling the brake caliper 81. The air guide member 43 is attached to the housing 10 by a fastening member such as a bolt (not illustrated) for example.

In order to avoid conflict between the air guide member 43 and the vehicle body 91 at the time of steering the vehicle wheel 92, the air guide member 43, as illustrated in Fig. 6, is desirably arranged in an inner diameter side region of a minimum virtual circle C which surrounds the housing 10, when viewed from the top. The virtual circle C has a center which is an intersection between the center axis O and the steering axis K of the vehicle wheel 92.

Moreover, as illustrated in Fig. 7, the air guide member 43, when viewed from the inner side in the vehicle width direction, may cover a broad range of the housing 10 excluding the front end part 41a and the center part of the cooling fins 41. In this case, it is possible to protect peripheral components of the in-wheel motor drive device 1A such as a power line 71 and an ABS sensor 72 from flying objects such as flipping stones.

Moreover, the guide plates 44, 45 of the air guide member 43 may be configured by sound absorbing material or soundproof material, as with the cover member 42 described above. The inlet 43a configured by the front end parts of the guide plates 44, 45 is open on the vehicle front side, and hence radiated sound will be directed in an opposite direction to the cabin; this thus suppresses noise within the vehicle.

As illustrated in Fig. 1, in a case in which a terminal box 70 is provided to protrude toward the inner side in the vehicle width direction on the rear cover 29v, the cooling fins 41 may be provided just on portions excluding the terminal box 70.

The embodiments disclosed in the present specification is only exemplary in all aspects, and should be considered not limitative. The scope of the present invention is shown not by the above descriptions but by the claims, and is intended to include meanings equivalent to the scope of the claims and all modifications within the scope.

### Reference Signs List

- 1, 1A, 100: In-wheel motor drive device
- 10: Housing
- 11: Wheel hub bearing unit
- 21: Motor unit
- 22: Motor rotating shaft
- 29, 129: Motor casing
- 31: Reducer unit
- 39: Reducer casing
- 41, 141: Cooling fin
- 42: Cover member
- 43: Air guide member
- 44, 45: Guide plate
- 80: Brake disk
- 81: Brake caliper
- 92: Vehicle Wheel
- W: Wheel

## Claims

1. An in-wheel motor drive device arranged inside a wheel, comprising:
a motor unit including a motor rotating shaft configured to rotate the wheel, and a motor casing configured to house the motor rotating shaft; and
a plurality of cooling fins provided on an inner end surface in a vehicle width direction of the motor casing to protrude from the inner end surface and configured to extend along a vehicle front-rear direction,
wherein in a state in which an orientation of a front-rear direction of the wheel is aligned with an orientation of the vehicle front-rear direction, a protruding tip position at a vehicle rear side of the cooling fins is positioned more inwards in the vehicle width direction than a protruding tip position at a vehicle front side of the cooling fins.

2. The in-wheel motor drive device according to claim 1, wherein a protruding height of the cooling fins increases toward the vehicle rear side.

3. The in-wheel motor drive device according to claim 1, wherein the inner end surface in the vehicle width direction of the motor casing is inclined or curved so as to be more inwards in the vehicle width direction toward the vehicle rear side.

4. The in-wheel motor drive device according to any one of claims 1 to 3, wherein
an axis of the motor rotating shaft is arranged on the vehicle front side of a center axis of the wheel, and
the in-wheel motor drive device further comprises an air guide member configured to guide air passing through the plurality of cooling fins to a brake caliper located on the vehicle rear side of the center axis of the wheel.

5. The in-wheel motor drive device according to claim 4, further comprising a reducer unit including a reducer mechanism configured to reduce and output rotation of the motor rotating shaft, and a reducer casing configured to house the reducer mechanism,
wherein the motor casing and the reducer casing configure a housing of the in-wheel motor drive device, and
the air guide member is arranged, when viewed from top, in an inner diameter side region of a minimum virtual circle which surrounds the housing and whose center is an intersection of a center axis and steering axis of the wheel.

6. The in-wheel motor drive device according to claim 4 or 5, wherein the air guide member is formed of porous material.
